## Europäisches Patentamt

## European Patent Office

## Office européen des brevets

(11) Veröffentlichungsnummer: **0 422 285 A2**

(12) **EUROPÄISCHE PATENTANMELDUNG**

(21) Anmeldenummer: **89120421.6**

(22) Anmeldetag: **04.11.89**

(51) Int. Cl.5: **G02B 23/18, G02B 7/12**

(30) Priorität: **10.10.89 DE 3933793**

(43) Veröffentlichungstag der Anmeldung:
**17.04.91 Patentblatt 91/16**

(84) Benannte Vertragsstaaten:
**DE FR GB IT**

(71) Anmelder: **JOSEF BRESSER IMPORT-EXPORT GMBH & CO.**
**Siemensstrasse 6**
**W-4280 Borken 1(DE)**

(72) Erfinder: **Kim, Byung-Sun**
**Mönkenstiege 9**
**W-4280 Borken/W(DE)**
Erfinder: **Bresser, Rudolf**
**Pastoratsweg 30**
**W-4284 Heiden/Westf.(DE)**

(74) Vertreter: **Herrmann-Trentepohl, Werner,**
**Dipl.-Ing. et al**
**Postfach 1140 Schaeferstrasse 18**
**W-4690 Herne 1(DE)**

(54) **Fernglas.**

(57) Bei einem Fernglas, dessen Okularzüge über eine Brücke miteinander verbunden und druch einen Mitteltrieb zu betätigen sind, welcher einen aus einem drehbaren Rändelkörper und einem Führungsstift bestehenden Antrieb aufweist, wobei der Mitteltrieb zur Normaleinstellung der Schärfe dient, ist erfindungsgemäß eine Fix-Focus-Einstellbarkeit durch den Mitteltrieb (6) und die Fixierung der Fix-Focus-Einstellung durch einen Rändelring (15), sowie eine Dual-Focus-Einstellung durch einen axial einstellbaren Anschlagring (16) des Führungsstiftes (13) vorgesehen, wobei zur Normaleinstellung der Schärfe die Fixierung mit dem Rändelring (15) gelöst und der Anschlag mit dem Anschlagring (16) aufgehoben sind.

Fig. 1

Die Erfindung betrifft ein Fernglas gemäß dem Oberbegriff des Anspruches 1.

Das erfindungsgemäße Fernglas ist ein Binokular. Die die beiden Okulare verbindende Brücke kann auf einen festen Augenabstand eingestellt sein. Vorzugsweise ist sie jedoch zur individuellen Einstellung auf den Augenabstand des Benutzers als Knickbrücke ausgebildet. Außerdem kann bei diesem Fernglas die normale Scharfeinstellung für Brillenträger und Normalsichtige durch die Okularzüge mit Hilfe des Mitteltriebes erfolgen. Dabei können für Brillenträger, welche ihre Brille bei Benutzung des erfindungsgemäßen Fernglases nicht aufsetzen, eines oder beide Okulare mit einer Dioptrieneinstellung versehen sein. Die erfindungsgemäßen Fernläser lassen sich deswegen den unterschiedlichen Anforderungen des Marktes weitgehend anpassen.

Der Mitteltrieb des erfindungsgemäßen Fernglases ist konventionell und deswegen praktisch ausgebildet. Dabei kann der Rändelkörper als Rändelrad, -schraube oder -walze ausgebildet sein. Rändelwalzen können bekanntlich in der Brücke unter gebracht werden, während Rändelräder bzw. -scheiben auch oberhalb oder unterhalb der Brücke angeordnet sein können. Durch diese Ausführungsmöglichkeiten der Erfindung läßt sie sich unterschiedlichen Ansprüchen anpassen.

Die Erfindung geht dabei von bekannten Ferngläsern aus, welche den beschriebenen Mitteltrieb aufweisen und von der Dioptrieneinstellung Gebrauch machen. Der Mitteltrieb kann auch mit einer Schärfenwippe verwirklicht sein. Diese Gläser haben den Vorteil, daß sie sich auf die Augen jedes Benutzers individuell einstellen lassen. Das geschieht bekanntlich so, daß das Fernglas unter Berücksichtigung der Tiefenschärfe auf eine bestimmte große Entfernung eingestellt wird, die z.B. 150 m beträgt. Bei dieser Einstellung wird die Dioptrieneinstellung durch den Benutzer vorgenommen, der im allgemeinen einen Dioptriering an einem oder an beiden Okularen verdreht. Ist die Einstellung vorgenommen, so kann jeder Schärfenbereich durch Verdrehen des Mitteltriebes eingestellt werden, ohne daß der Benutzer seine Brille aufzusetzen braucht.

Nachteilig ist indessen, daß die Abstimmung des Fernglases auf die Augen des jeweiligen Benutzers erhebliche individuelle Probleme aufwirft, wodurch viele Benutzer nicht imstande sind, das Fernglas richtig zu gebrauchen.

Es ist deshalb versucht worden, dem Benutzer die Einstellung des Fernglases zu erleichtern. Eine Ausführungsart solcher Ferngläser mit erleichterter Einstellung benutzt eine Einzelokulareinstellung. Hierbei erfolgt die Scharfeinstellung durch Drehen des linken oder rechten Dioptrieringes, mit dem gleichzeitig die Entfernung eingestellt wird. Der Nachteil solcher Ferngläser besteht darin, daß der einmal eingestellte Schärfenbereich nur durch Verstellung jedes der beiden Okulare verändert werden kann. Das verlängert die Zeit, die für die Veränderung des Schärfenbereiches erforderlich ist. In der Praxis ergibt sich dan die Schwierigkeit, daß die Einstellung des Fernglases häufig zu lange dauert.

Ein anderer Versuch, dem Benutzer die Scharfeinstellung des Fernglases zu erleichtern, besteht darin, das Fernglas mit einer Fix-Focus-Einstellung zu versehen. Bei diesen Ferngläsern ist die Optik des Fernglases auf ca. 70 bis 80 m fest eingestellt. Eine Veränderung der Schärfe ist daher nicht möglich. Zwar können solche Ferngläser bei Normalsichtigen, welche eine hundertprozentige Sehleistung auf beiden Augen mitbringen oder bei Brillenträgern, die ihre Brille benutzen, ohne jede Einstellung verwendet werden, wobei allerdings nur objekte im Schärfenbereich von ca. 14 m bis 80 m scharf erscheinen. Der Nachteil besteht darin, daß infolge der Festeinstellung des Schärfenbereiches auf ca. 80 m die Beobachtung im Unendlichkeitsbereich keine einwandfreie Detailschärfe ergibt und dabei auf das Akkomodiervermögen der Augen gerechnet wird. Das Akkomodieren der Augen führt jedoch zur Überbeanspruchung, die ihrerseits zu Kopfschmerzen des Betrachters Anlaß geben kann. Außerdem läßt sich der Nahbereich nur ab 14 m benutzen, weil bei kleineren Entfernungen ebenfalls keine einwandfreie Detailschärfe erreicht wird. Außerdem können Benutzer mit Augenfehlern auf einem oder auf beiden Augen ohne optische Sehhilfe, d.h. normalerweise ohne Brille ein derartiges Fernglas nicht benutzen.

Der Erfindung liegt die Aufgabe zugrunde, ein Fernglas zu schaffen, welches auf einfache Weise Einstellfehler des Benutzers kaum noch zuläßt und die beschriebenen Nachteile weitgehend ausschaltet.

Diese Aufgabe löst die Erfindung mit den Merkmalen des Anspruches 1. Weitere Merkmale der Erfindung sind Gegenstand der Unteransprüche.

Gemäß der Erfindung ist das eingangs beschriebene Fernglas, welches einen der Scharfeinstellung für alle Entfernungen dienenden Mittelrieb aufweist mit einem weiteren Rändelring und einem Anschlagring versehen, wodurch zwei weitere Einstellmöglichkeiten geschaffen werden, die eine Fix-Focus-Einstellung erlauben, deren Nachteil aber durch eine Dual-Focus-Einstellung zu vermeiden ist. Diese Dual-Focus-Einstellung ermöglicht je eine Fix-Focus-Einstellung auf einen Nahbereich, der beispielsweise bei ca. 6 m bis 14 m liegen kann und auf einen Fernbereich, der sich auf ca. 14 m bis unendlich einstellen läßt. Da an dem grundsätzlichen Aufbau des Fernglases, wie er eingangs als bekannt vorausgesetzt ist, durch die Erfindung nichts geändert wird, kann das Glas sowohl von normalsichtigen wie auch von fehlsichtigen Benutzern gehandhabt werden, die mit oder ohne Sehhilfe das Glas benutzen.

Die Erfindung hat den Vorteil, daß das Fernglas durch Benutzung der Dual-Focus-Einstellung für alle Bereiche sofort benutzt werden kann, wobei beim Übergang auf den Fix-Focus des Nahbereiches bzw. auf den Fix-Focus des Fernbereiches lediglich eine Umstellung des Triebes erforderlich ist. Andererseits kann das erfindungsgemäße Fernglas wie ein konventionelles Fernglas mit Einstellung auf jeden beliebigen Schärfenbereich benutzt werden. Ungeübte Benutzer können durch Benutzung der Dual-Focus-Einstellung Fehler weitgehend vermeiden. Fachleute können das erfindungsgemäße Fernglas wie gewohnt benutzen, sich aber auch die Vorteile einer Fix-Focus-Einstellung zunutze machen. Sie bestehen darin, daß der Benutzer das Fernglas wesentlich schneller auf Objekte in unterschiedlichen Schärfenebenen einstellen kann.

Vorzugsweise wird die Erfindung mit den Merkmalen des Anspruches 2 verwirklicht. Hierbei ergibt sich ein einfacher Aufbau der Fix-Focus-Einstellung für jeden Schärfenbereich und eine einfach zu handhabende Umstellung des erfindungsgemäßen Fernglases auf die konventionelle Normaleinstellung.

Die Erfindung kombiniert im Anspruch 3 die beschriebene Fix-Focus-Einstellung mit dem Anschlagring, wodurch eine weiter vereinfachte Konstruktion erreicht wird.

Die beschriebenen zusätzlichen Einstellmöglichkeiten des erfindungsgemäßen Fernglases sollen irrtumsfrei betätigt werden können, auch wenn der Benutzer das Fernglas vor die Augen hält. Eine praktische Ausführungsform dieser Möglichkeit gestatten die Merkmale des Anspruches 4. Hierbei sind die beiden zusätzlichen Einstellmöglichkeiten, die das Fernglas gemäß der Erfindung bietet, in axialer Verlängerung der Normaleinstellung angeordnet.

Die Merkmale des Anspruches 5 geben eine Ausführungsform der Erfindung wieder, bei der ein präzises Arbeiten des Anschlagringes gewährleistet ist. Das geschieht durch die Aufteilung des Anschlages auf mehrere Ringflächen, die zur gegenseitigen Anlage kommen.

Die Einzelheiten, weiteren Merkmale und andere Vorteile der Erfindung ergeben sich aus der nachfolgenden Beschreibung einer Ausführungsform anhand der Figuren in der Zeichnung; es zeigen

Fig. 1 eine Teilansicht des erfindungsgemäßen Fernglases, wobei die den Antrieb der Okularzüge bildenden Teile im Schnitt dargestellt sind,

Fig. 2 eine Einzeldarstellung zur Wiedergabe der Position des Antriebes bei Fix-Focus-Einstellung und

Fig. 3 in der Fig. 2 entsprechender Darstellung die im Schnitt wiedergegebenen Teile des Antriebes bei der Dual-Focus-Einstellung.

Das allgemein mit (1) bezeichnete Fernglas ist ein Prismenglas, bei dem der Abstand der nicht dargestellten Objektive größer als der Abstand der Okulare ist, von denen jedoch lediglich ein Okular bei (2) gezeichnet ist. Das Prismengehäuse (3) dient zur Führung des Okularauszuges (4). Die beiden Okularauszüge sind durch eine Knickbrücke (5) miteinander verbunden. In der optischen Mittelachse ist ein Mitteltrieb (6) vorgesehen, welcher zwischen zwei Brückenscharnieren (7, 8) angeordnet ist, welche die beiden Prismengehäuse miteinander verbinden. Der Mitteltrieb hat zwei bewegliche Teile, nämlich eine Rändelwalze (9) und einen Führungsstift (10). Diese Teile werden durch einen festen Tubus (11) ergänzt. Ein Führungsstift (12) läuft in einer spiralförmigen Führungsnut (13), welche in den Innenzylinder der Rändelwalze (9) eingeschnitten ist. Durch die mehrteilig Fixierung durch die bei (14) wiedergegebene Fixierung des Führungsstiftes (10) an der Brücke (5) werden die beiden Okularzüge (4) gleichzeitig in jeweils einer der beiden Richtungen betätigt.

In weiter unten näher erläuterter Weise weist das Fernglas (1) eine Fix-Focus-Einstellbarkeit durch den Mitteltrieb (6) und einen Rändelring (15) auf, welcher fixiert werden kann. Dadurch ist eine Dual-Focus-Einstellung möglich, die durch einen axial einstellbaren Anschlagring (16) gewährleistet ist.

Für die dadurch bedingten zusätzlichen Teile ist der Führungsstift (10) mit einer Achse (17) verlängert, die drehfest bei (18) in der Stirnseite des Führungsstiftes befestigt ist. Die Verlängerungsachse (17) durchdringt eine Flanschschraube (19), welche sich auf den unteren Scharnierbändern (8) abstützt und im unteren Ende des Tubus (11) verschraubt ist.

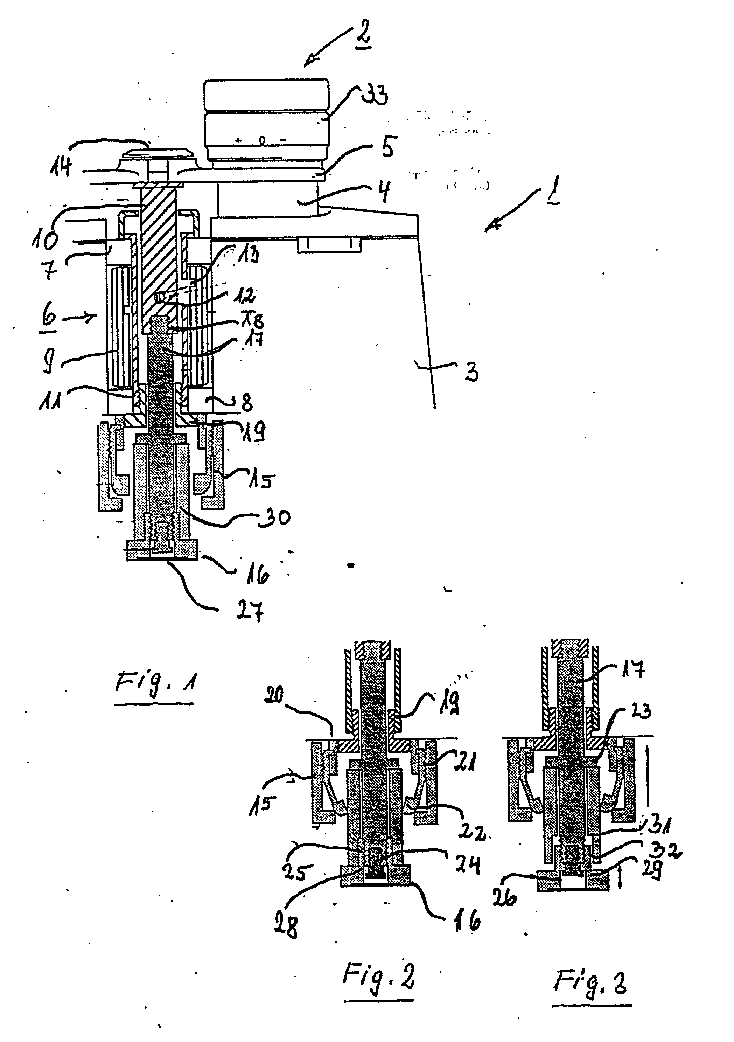

Wie insbesondere aus den Fig. 2 und 3 hervorgeht, sitzt auf der Flanschschraube (19) eine Buchse (20), die in einer äußeren Nut den Innenflansch eines Klemmrings (21) aufnimmt. Der Klemmring hat nach innen gerichtete Klemmbacken (22) und auf seinem oberen zylindrischen Teil ein Außengewinde, auf welches ein Innengewinde des Rändelringes (15) gedreht ist. Wie ein Vergleich der Fig. 1 und 2 erkennen läßt, werden die Klemmbacken (22) gelöst, sobald sich der Rändelring (15) in seiner oberen, d.h. den Scharnierbändern (8) genäherten Stellung befindet. Die Klemmbacken werden geschlossen, sobald die untere, aus den Fig. 1 und 12 ersichtliche Stellung des Klemmringes erreicht ist.

Die zur Verlängerung des Stiftes (10) dienende Achse (17) ist mit einem zylindrischen Flansch (23) versehen. Sie weist an ihrem freien Ende eine Gewindespindel (24) auf. Auf der Spindel (25) läuft das Innengewinde eines Zapfens (24), der einstük-kig mit dem Anschlagring (16) ausgebildet ist. Der Anschlagring ist mit einer zylindrischen Bohrung (26) durchbrochen, welche mit einem Abdeckplättchen (27) normalerweise verschlossen ist. Unter dem Abdeckblättchen (27) sitzt eine Madenschraube (28) mit einem Kopf (29). Sie ist in die freie Stirnseite der Achse (17) eingedreht.

Die Klemmbacken (22) des Rändelringes (15) wirken auf einen Fixtubus (29) (Fig. 2), der zwischen der unteren Ringfläche des Anschlagringes (16) und der inneren ringförmigen Endfläche (31) einer Ausdrehung (32) des Fixtubus (15) und der Ringfläche des Flansches (23) verspannt werden kann. In der Ausdrehung (32) sitzt der Zapfen (24) des Anschlagringes (16).

Die Handhabung des beschriebenen Fernglases geschieht wie folgt:

Für die Grundeinstellung wird zunächst der Rändelring (15) so verdreht, daß die Backen (22) den Fixtubus (30) freigeben. Bei dem normalerweise vorgesehenen Rechtsgewinde erfolgt dies durch Linksdrehung des Rändelrings (15). Danach wird die gerändelte Anschlagschraube (16) in die Position nach Fig. 2 verbracht, also bei dem üblicherweise vorgesehenen Rechtsgewinde nach rechts gedreht, bis die beschriebenen Anschlagflächen aufeinanderliegen. Dadurch ist der Tubus (30) fixiert. Der Benutzer visiert nunmehr ein Objekt in einem Abstand von ca. 150 m an und stellt die Schärfe durch Drehen des Mitteltriebes (6) ein. Sobald das geschehen ist, wird der Rändelring (15) angezogen, so daß die Klemmbacken (22) den Tubus (30) erfassen. Das geschieht durch eine Rechtsdrehung. Danach nehmen die Teile ihre aus Fig. 2 ersichtliche Stellung ein. Das Fernglas (1) ist dann in der Fix-Focus-Einstellung, d.h. die Schärfe ist fix eingestellt, auf einen Schärfenbereich von ca. 15 m bis unendlich.

Die nachfolgende Dual-Focus-Einstellung setzt die Position der beschriebenen Teile nach Fig. 3 voraus. Dazu wird der Anschlagring (16) bis zum Anschlag nach links gedreht, d.h. bis sich der Zapfen (32) des Anschlagringes (16) auf der unteren Ringfläche des Kopfes (29) der Madenschraube (28) ab stützt. Wenn jetzt der Benutzer den Mitteltrieb bis zum Anschlag nach rechts verdreht, befindet er sich im Fernbereich. Umgekehrt führt die Verdrehung des Mitteltriebes (6) bis zum Anschlag nach links in den Nahbereich. Die Einstellung nach Fig. 3 ist also die übliche Einstellung für den Gebrauch des Fernglases (1).

Soll auf übliche, d.h. konventionelle Weise das Fernglas (1) auf verschiedene Bereiche eingestellt werden, so braucht lediglich der Rändelring (15) gelöst zu werden. Das erfolgt durch Linksdrehung. Dann nämlich läßt sich der Mitteltrieb (6) über den vollen Bereich betätigen.

Das erfindungsgemäße Fernglas ist gemäß dem Ausführungsbeispiel mit einem Diopterring (33) versehen, wodurch es auf Benutzer eingestellt werden kann, die normalerweise eine Sehhilfe benötigen, diese aber bei Benutzung des Fernglases nicht verwenden wollen.

Bei dem dargestellten Fernglas führt nach Lösen des Rändelringes (15) der volle Bewegungsbetrag des Führungsstiftes (12) in der Nut (13) nach oben zur Bewegung der Brücke (5) zum vollen Auszug der Okularzüge durch Linksdrehung der Rändelwalze (9). Eine Rechtsdrehung der Rändelwalze (9) bewegt den Stift (12) nach unten und die Okularzüge damit in den unendlichen Schärfebe-reich des Prismenglases.

## Ansprüche

1. Fernglas, dessen Okularzüge über eine Brücke miteinander verbunden und durch einen Mitteltrieb zu betätigen sind, welcher einen aus einem drehbaren Rändelkörper und einem Führungsstift bestehenden Antrieb aufweist, wobei der Mitteltrieb zur Normaleinstellung der Schärfe dient, gekennzeichnet durch eine Fix-Focus-Einstellbarkeit durch den Mitteltrieb (6) und die Fixierung der Fix-Focus-Einstellung durch einen Rändelring (15), sowie durch eine Dual-Focus-Einstellung durch einen axial einstellbaren Anschlagring (16) des Führungsstiftes (13), wobei zur Normaleinstellung der Schärfe die Fixierung mit dem Rändelring (15) gelöst und der Anschlag mit dem Anschlagring (16) aufgehoben sind.

2. Fernglas nach Anspruch 1, dadurch gekennzeichnet, daß ein auf dem Führungsstift (13) drehfester Fixtubus (30) und ein Klemmring (21), der mit dem Rändelring (15) zusammenwirkt, zur Fix-Focus-Einstellung dienen, wobei für die Normaleinstellung die Drehfestigkeit des Fixtubus (30) aufgehoben ist.

3. Fernglas nach einem der Ansprüche 1 oder 2, dadurch gekennzeichnet, daß der Anschlagring (16) mit einer Verschraubung des Führungsstiftes (10) verbunden ist und mit dem Fixtubus (30) zusammenwirkt.

4. Fernglas nach Anspruch 1 und wenigstens einem der Ansprüche 2 oder 3, dadurch gekennzeichnet, daß der zur Fixierung dienende Rändelring (15) und der Anschlagring (16) unterhalb der Brücke (5) angeordnet sind und der Führungsstift (10) eine Verlängerung (17) aufweist, auf der der Tubus (30) zwischen einem Flansch (19) des Verlängerungsstiftes (17) und dem Anschlagring (16) angeordnet sind, während der Klemmring (21) an der Führung (11) des Antriebes (6) befestigt ist.

5. Fernglas nach Anspruch 1 und einem oder mehreren der Ansprüche 1 bis 4, dadurch gekennzeichnet, daß die Verschraubung ein in einem in dem Tubus (30) versenkten Zapfen (25) des Anschlagringes (16) angebrachtes Innengewinde und ein Außengewinde aufweist, welches auf dem als Spindel ausgebildeten Ende des Führungsstiftes (10, 17) angebracht ist, wobei als Anschlag flächen die äußeren Ringflächen des Tubus (30) und die inneren Ringflächen des Zapfens (25) und des Anschlagringes (16) dienen.

6. Fernglas nach Anspruch 1 und einem oder mehreren der Ansprüche 2 bis 5, dadurch gekennzeichnet, daß der Auszug des Anschlagringes (16) und des Zapfens (25) mit dem Kopf einer Madenschraube (28) begrenzt ist, die unter die Stirnseite des Führungsstiftes (10, 17) versenkt ist.

Fig. 1

Fig. 2

Fig. 3